# FASCICULE DE BREVET EUROPEEN

(11) **EP 0 937 599 B1**
(45) Date de publication et mention de la délivrance du brevet: **17.09.2003**
(21) Numéro de dépôt: 97905161.2
(22) Date de dépôt: 28.02.1997
(51) Int. Cl.: B60J 7/06, B60P 7/04

(54) **SYSTEME D'ENROULEMENT ET DE DEROULEMENT DE LA BACHE DE VEHICULES DE TRANSPORT DE MARCHANDISES**
SYSTEM ZUM AUFROLLEN UND ABROLLEN EINER PLANE FÜR GÜTERFAHRZEUGE
CANVAS ROLLING AND UNROLLING SYSTEM FOR GOODS TRANSPORT VEHICULES

(30) Priorité: 27.02.1997 ES 9700434
(43) Date de publication de la demande: 25.08.1999
(73) Titulaire: Seoane Sanchez, José Francisco, 15011 La Coruna (ES)
(72) Inventeur: SEOANE SANCHEZ, José Francisco, E-15011 La Coruna (ES); MERINO LAMELA, Julio Guzman, E-15011 La Coruna (ES)
(74) Mandataire: Civanto Villar, Alicia
(86) Numéro de dépôt international: ES9700046
(87) Numéro de publication internationale: WO98001312

(56) Documents cités:
- EP-A- 0 305 636
- WO-A-92/05047
- FR-A- 751 374
- FR-A- 2 259 721
- US-A- 3 586 365

## Description

### Objectif de l'invention

Cette invention, système de bâchage et dèbachâge de bannes pour véhicules de transport de marchandises, conformément à l'énoncé de ce mémoire descriptif, concerne un système automatique pour le bâchage et débâchage de l'aire de charge dans les véhicules de transport de marchandises. Il a été conçu et réalise en vue d'obtenir plusieurs avantages remarquables par rapport au système manuel que l'on emploie traditionellement pour couvrir les véhicules avec des bannes et protéger les marchandises transportées.

Le système est conçu afin que deux moteurs préparés et mécanisés de façon appropiée, puissent exercer la force capable à mouvoir un rouleau dans lequel la banne est enroulée, de façon à permettre que celle-ci glisse par des glissières mécanisés jusqu'à ce qu'elle recouvre hermétiquement l'enceinte dans lequel les marchandises sont transportées et, aussi de façon automatique pouvoir recueillir la banne au moment de décharger en agissant tout simplement sour la touche d'une commande conectée aux moteurs.

### Antécédents préalables à l'invention

D'après les normes oficielles, tous les véhicules transportant une quelconque marchandise sont obligés de la couvrir et de veiller à ce que la boîte des véhicules soit bien bâchée, a fin d'éviter la chute de résidus provoquant des problèmes de saleté, de toxicité en rapport avec la contamination de l'ambiance et qui risquent de proiduire des accidents, soit sur la route, le réseau des chemins de fer, etc.

D'autre part, nombre de marchandises peuvent être afectées, au cours de transport, par des phénomènes atmosphériques (le soleil, l'eau, la grêle, la neige, etc.) et, de sorte, être abîmées dans le cas où celles-là n'auraient été dûment protegées (des cereales, des engrains, du charbon, etc.).

Actuellement les bannes qui protègent les marchandises sont déployées et recueilles à la main, ce que oblige les conducteurs des véhicules à monter sur le dêpot ou la marchandise est transportée; ceci comporte un risque d'accidents à cause de la hauteur et de l'effort que cela exige, outre qu'ils entrent en contact direct avec les matériaux transportées qui salissent, et émettent des oudeurs impregnant les vêtements, ce qui fait que lesdits oudeurs arrivent à la cabine des camions où l'on est parfois obligé de se mettre des vêtements spéciaux pour certaines marchandises, comme c'est le cas des matériaux pour macadamiser, des résidus des abattoirs, etc.

Tout ce procès oblige à des pertes de temps considérables. Bâcher un véhicule exige entre quinze et vingt-cinq minutes et le débâcher entre dix et vingt minutes, outre les frais de lavage des salopettes, des cabines, des chaussures, etc..

À présent il existe des véhicules qui ont placé un rouleau pour mieux disposer la banne, ou bien un câble pour faciliter le mouvement, mais dans tous ces cas le système est lent, il faut de l'effort corporel et ceci n'evite pas que les gens soient obligés de monter à la zone supérieure du dépôt ou boîte du véhicule pour faire les opérations de bâchage et dèbâchage.

Parmi les antécédents connus au stade actuel de la technique, on peut citer en premieur lieu le brevet français FR-751374 de 1933, qui traite d'un système selon le préambule de la revendication 1, permettant de capoter les voitures d'époque, dont l'objet n'est pas applicable aux caisses de camion.

De même, le brevet WO 92/05047 de 1992, tente de résoudre le problème de la protection de la charge d'un camion à l'aide d'un plastique qui s'ajuste à la forme de celle-ci. Mais cette solution présente des problèmes d'ordre pratique, tels que le calcul de la hauteur des monticules à recouvrir car, dans le cas où le plastique est en contact avec l'un d'entre eux, celui-ci est freiné dans son avance. Par ailleurs, ce système n'assure pas une bonne étanchéité, de l'eau pouvant mouiller la charge et la banne n'ayant pas de sortie pour l'evacuation de l'eau.

Cette invention résout tous les problèmes actuels, puisque ce système permet de réaliser de façon automatique les opérations de bâchage et débâchage, qui s'effectuent au complet entre trois et six minutes, laissent le véhicule hermétiquement fermé, évitent des chutes, réduissent les temps et, en consequence améliorent les coûts; outre que cela élimine la nécessité de monter au dépôt ou boîte du véhicule, ce qui entraîne un risque importat d'accidents, de salissures et de troubles dans les conditions de travail des ouvriers. Tous ces problèmes constituent à présent une revendication importante des syndicats et des associations des routiers, étant donné que les difficultés et les risques provenant de faire à la main le bâchage et dèbâchage augmentent à mesure que les ouvriers atteignent un certain âge.

### Description de l'invention

Cette invention de système de bâchage et dèbâchage de bannes pour véhicules de transport de marchandises concerne un mecanisme pour enrouler la banne. Est prévu que deux moteurs, préparés et mécanisés pur ce faire, exercent le couple suffisant à faire tourner un rouleau où la banne est enroulée, et permettent que celle-ci puisse glisser par des glissières mecanisées jusqu'à ce qu'elle recouvre hermétiquement l'enceinte sur lequel les marchandises sont transportées, et de la même façon puisse recueillir la banne au moment de décharger, tout commandé simplement sur la touche d'une commande conectée aux moteurs.

Les moteurs seront alimentés par la batterie du vehicule. Les moteurs transmittent couple mecanique pour tourner un axe avec deux pignons mecanisées, pour synchroniser le rouleau et la chaine parmi l'interieur de le guide. Ceux moteurs, avec double sense, permettent le bâchage et debâchage de banne.

Le guide est preparé pour dans l'interieur circule une chaine synchronisé entre deux pignons, unie a une glissière par ses extremités. La glissière entraîne la banne dans le guide, le banne étant unie a la glissière au moyen d'un cable et une planchette de trâinage, afin de fermer hermétiquement l'aire de charge du véhicule.

En tant que complement de la description que l'on va réaliser tout de suite, et pour aider a une compréhension plus précise des caracteristiques de l'invention, on accompagne ce memoire descriptif d'un jeu de dessins dont les figures permettent de comprendre plus facilement les innovations, améliorations et avantages du système de l'invention.

### Description sommaire des dessins

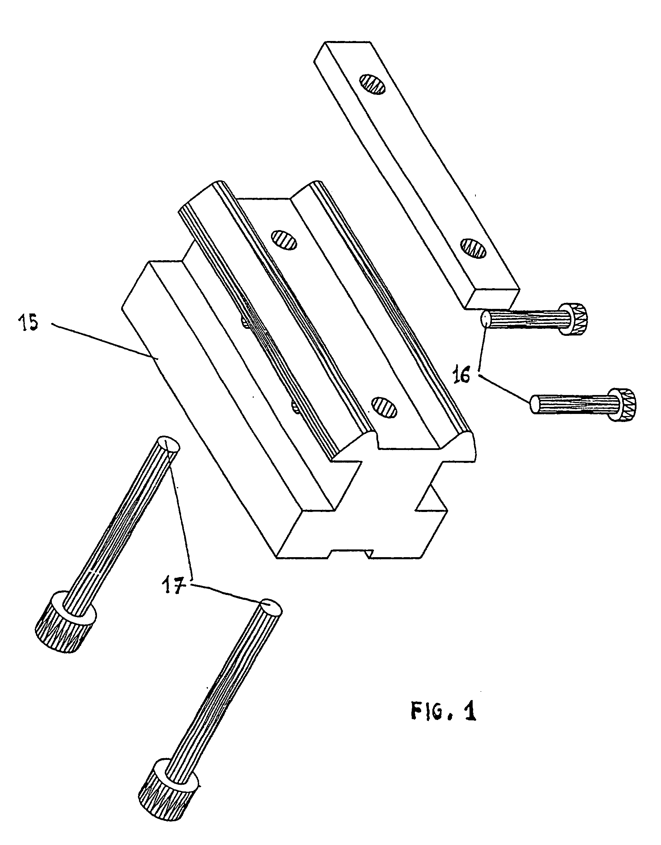

Figure 1: montre une vue en perspective isométrique de la glissière.

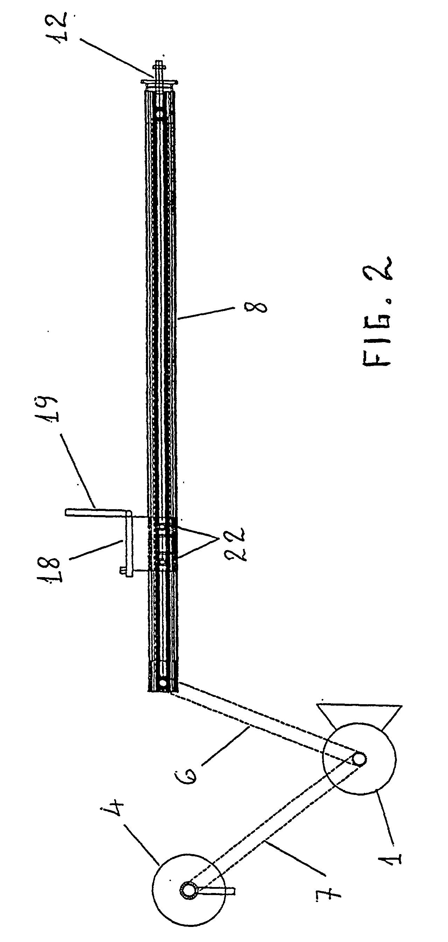

Figure 2: montre une vue latérale droite des composantes du système.

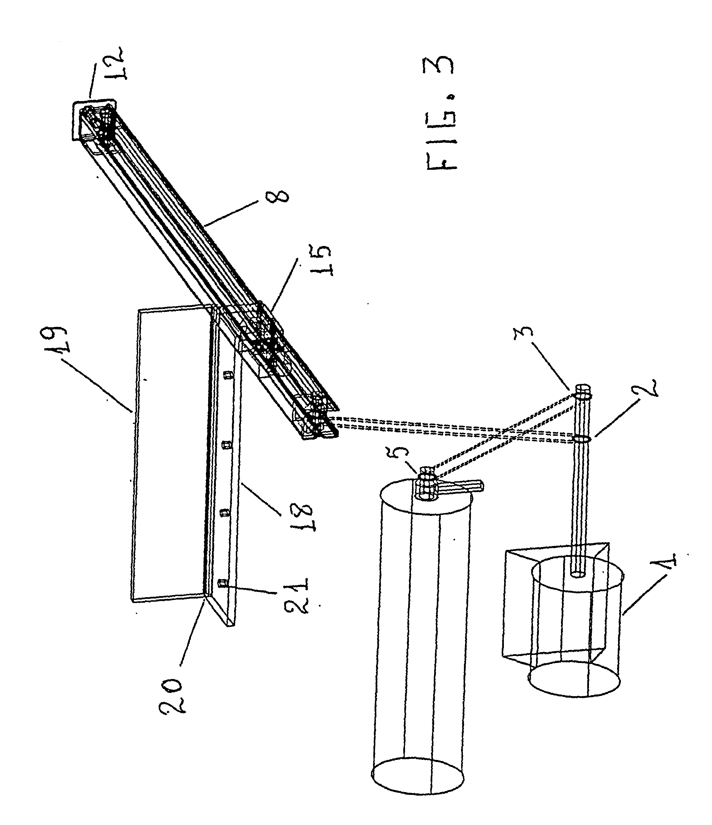

Figure 3: montre une vue en perspective isométrique de la moitié droite du système.

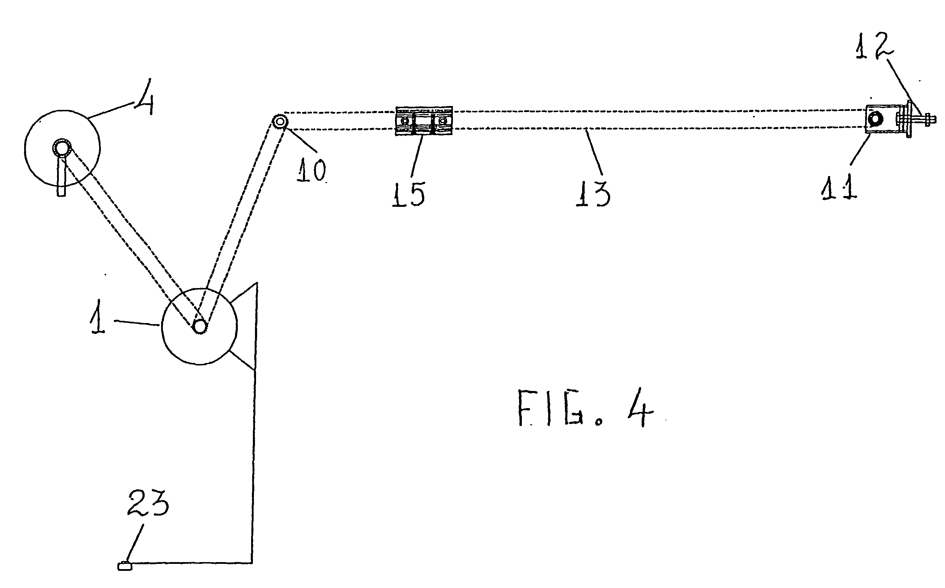

Figure 4: montre une vue latérale droite du système, en occultant le guide, le profil et la planchette de traînage pour pouvoir apprécier le fonctionnement intérieur.

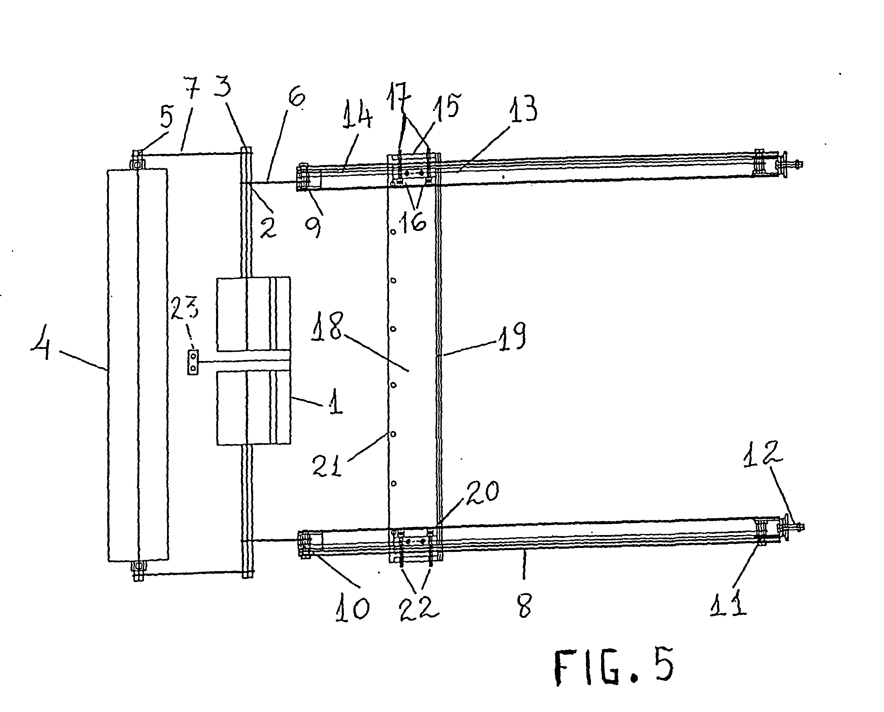

Figure 5: montre une vue en plan supérieur des composantes du système pour être accouplées à l'enceinte de charge du véhicule, où l'on peut apprécier la synchronisation entre elles.

### Description d'un mode de réalisation preferentielle

Le present invention, système de bâchage et dèbâchage de bannes pour véhicules de transport de marchandises concerne un ensemble avec un mecanisme pour enrouler la banne actionnée pour moteurs d'enroulements.

Au vu des figures commentées, on peut constater comment le prèsent système se compose essentiellement d'une banne qui peut s'enrouler sur un rouleau (4) situé à l'avant de la caisse du vèhicule, pour être étendue et repliée au dessus de la caisse du vèhicule, recouvrant ainsi la charge.

Ce système est pourvu de glissières (15) qui se dèplacent à l'interieur de guides mecanissées (8), faissant une tige de pince mécanique sur la banne étant ancrée entre les deux glissières à l'aide de trous d'ancrage (17) et (22). Cette tige se compose d'une planchette de traînage (19) reliée par une charnière à un profil (18) doté de trous d'ancrage (21).

Le système est actionné de façon synchronisée par deux moteurs (1) monophases permet d'obtenir une fermeture d'une étanchéité acceptable.

Par ailleurs, la banne est renforcée sur les côtes, sur toute sa longeur, par des cables (14) en acier reliés au glissières (15), la transmission des moteurs (1) étant assurée par des chaînes (13), engrenées sur des pignons (9), (10) et (11) et une axe tenseur (12). Ce système est actionné par une commande (23) connectée aux moteurs.

Le présent système peut comprendre deux moteurs électriques (1), dont la puissance dépend de la longeur du véhicule et des conditions de traînage. On peut également disposer de la même fonction avec un seul moteur, plus puissant. De même, on peut remplacer le moteur a double sens par deux moteurs dont chacun remplit une fonction de bàchage et dèbâchage de banne, respectivement. Le système comporte en outre un embrayage, alimenté par la batterie du véhicule, pouvant être déconnecté en cas de panne.

Le système pourrait aussi être actionné par le moteur du véhicule lui-même, à l'aide d'une transmission mécanique a la boîte de vitesses du vèhicule, possibilité que peut être incorporée au système.

Par ailleurs, le rouleau (4) sur lequel s'enroule la banne est synchronisé avec le moteur (1) grâce à deux pignons (3), (5), actionnés par une chaîne (7) de transmission et l'un des glissières par un pignon (2) et une chaîne (6) de transmission. De cette manière, il est possible de libérer à tout moment la longeur de banne nécessaire tout en maintenant celle-ci à une tension constante et en évitant sa chute.

La banne peut aussi être sostenue par une armature en forme de soufflet, ou encore par des bras articulés, qui permettent de l'adapter à certain besoins du vèhicule pour effectuer la bàchage et dèbâchage d'une façon plus spécifique. Également, la banne peut, au lieu d'être placée transversalement â la caisse du vehicule, être placée en longeur et se dèplacer dans le sens de la largeur du compartiment de charge. Il suffira pour cela de modifier l'emplacement des éléments du système.

Un outre alternative possible consiste à ce que le système d'alimentation du moteur (1) soit aussi une source d'alimentation externe, par example, sur les wagons de chemin de fer, dans laquelle l'énergie d'alimentation du moteur, au lieu de provenir de la batterie, peut venir directement, à travers un transformateur, de la prise centrale de l'énergie.

## Revendications

1. Système de bâchage et dèbâchage de bannes pour véhicules de transport de marchandises, composé d'une banne enroulée sur un rouleau (4) situé a l'avant de la caisse du vèhicule, pouvant être étendue et repliée au dessus de la caisse de chargement du véhicule, le système étant pourvu de glissières (15) qui se déplacent à l'intérieur de guides (8), une tige, qui fait l'office de pince mécanique sur la banne, étant ancrée entre les deux glissières à l'aide de vis et de trous d'ancrage (17) et (22), la banne étant renforcée sur les côtés, sur toute sa longeur, de câbles (14) en acier reliés aux glissières, la transmission des moteurs (1) étant assurée par des chaînes (13) engrenées sur des pignons (9), (10) et (11) et un axe tenseur (12), le système étant actionné par une commande (23) connectée aux moteurs, **charactérisé en ce que** la tige se compose d'une planchette de traînage (19) est reliée par une charnière a un profil (18) doté de trous d'ancrage (21), le tout étant actionée de façon synchronisée par deux moteurs monophases (1).

2. Système de bâchage et dèbâchage de bannes pour véhicules de transport de marchandises, selon la permière revendication, **se caractérisant par le fait que** comporte deux moteurs (1) électriques, dont la puissance dépend de la longeur du véhicule et du besoin de traînage, avec un embrayage de déconnexion en cas de panne, alimentés par la batterie du véhicule.

3. Système de bâchage et dèbâchage de bannes pour véhicules de transport de marchandises, selon la permière revendication, **se caractérisant par le fait qu'**il est actionné par le moteur du véhicule à l'aide d'une transmission mécanique au boîte de vitesses.

4. Système de bâchage et dèbâchage de bannes pour vèhicules de transport de marchandises, selon les revendications précédents, **se caractérisant par le fait que** le rouleau (4) sur lequel s'enroule la banne est synchronisé avec le moteur (1) à l'aide de deux pignons (3), (5), actionnés par une chaîne (7) de transmission et l'un des glissières par un pignon (2) et une chaîne (6) de transmission.

5. Système de bâchage et dèbâchage de bannes pour véhicules de transport de marchandises, selon les revendications précédents, **se caractérisant par le fait que** les guides (8) disposent de pinces fixées pour que se déplace en leur intérieur, dans les deux senses, la banne soutenue par les cables (14) latéraux, ce qui assure une certaine étanchéité de fermeture sur les côtes.

6. Système de bâchage et dèbâchage de bannes pour véhicules de transport de marchandises, selon les revendications précédents, **se caractérisant par le fait que** la banne peut être soutenue par une armature en forme de soufflet, ou encore par des bras articulés, qui permettent de l'adapter aux besoins du véhicule pour effectuer de bâchage et dèbâchage.

7. Système de bâchage et dèbâchage de bannes pour véhicules de transport de marchandises, selon les revendications précédents, **se caractérisant par le fait que** le rouleau, au lieu d'être placée transversalement à la caisse du véhicule, peut être placée dans le sens de la longeur, ainsi que la banne peut se déplacer dans le sens de la largeur de la caisse de chargement.

8. Système de bâchage et dèbâchage de bannes pour véhicules de transport de marchandises, selon les revendications précédents, **se caractérisant par le fait que** le système d'alimentation du moteur (1) constitue une source d'alimentation externe.

## Patentansprüche

1. Markisensystem zum Überzug und Aufrollen eines Zeltstoffes für Warentransportfahrzeuge, das aus einem eingerollten Zeltstoff besteht, der auf einer Rolle (4) aufgerollt ist, die sich im vorderen Teil der Ladefläche befindet. Die Abdeckung kann über der Ladefläche des Fahrzeugs entfaltet und ausgestreckt werden, da das System über Gleitstücke (15) verfügt, die innerhalb von Führungsschienen (8) laufen. Ein Schaft, der als mecanische Klemme auf dem Zeltstoff fungiert, ist zwischen zwei Gleitstücken mithilfe von Verankerungen (17) und (22) befestigt. Der Schaft besteht aus einem Schiebeblech, das mittels eines Scharniers an einem Profil (18) angebracht ist und mit Verankerungen (21) versehen ist. Die Anglagle funktioniert gleichgeschaltet mithilfe von zwei Einphassenmotoren (1). Der Zeltstoff wird an den Seiten auf seiner ganzen Länge durch Stahlkabel (14) verstärkt, die an den Gleitstücken befestigt sind. Die Übertragung der Motoren läuft über Ketten (13) ab, die mit Zahnrädern (9), (10) und (11) und einer Spannungsachse (12) verzahnt sind. Das System wird mittels eines Schalters (23) betätigt, der Verbindung zu den Motoren hat.

2. Markisensystem zum Überzug und Aufrollen eines Zeltstoffes für Warentransportfahrzeuge, das laut dem ersten Patentanspruch aus zwei elektrischen Motoren (1) besteht, deren Leistung von der Fahrzeuglänge und der nötigen Schubkraft abhängig ist. Im Schadensfall können die Motoren durch eine Kupplung abgeschaltet werden. Sie erhalten Strom von der Batterie des Fahrzeugs.

3. Markisensystem zum Überzug und Aufrollen eines Zeltstoffes für Warentransportfahrzeuge, das laut dem ersten Patentanspruch **dadurch gekennzeichnet ist, dass** es über den Motor des Fahrseuges mithilfe einer mechanischen Übertragung im Getriebekasten Antrieb erhält.

4. Markisensystem zum Überzug und Aufrollen eines Zeltstoffes für Warentransportfahrzeuge, das laut obiger Patentansprüche **dadurch gekennzeichnet ist, dass** die Rolle (4), auf der der Zeltstoff aufgerollt ist, mit dem Motor (1) durch zwei Zahnräder (3) und (5) gleichgeschaltet wird, welche über eine Übertragungskette (7) funktionieren. Eines der Gleitstücke wird anhand eines Zahnrades (2) und einer Übertragungskette (6) betätigt.

5. Markisensystem zum Überzug und Aufrollen eines Zeltstoffes für Warentransportfahrzeuge, das laut obiger Patentansprüche **dadurch gekennzeichnet ist, dass** die Führungsschienen (8) mit an diesen befestigten Klemmen ausgestatted sind, damit in ihrem Inneren der von zwei seitlichen Kabeln (14) gehaltene Zeltstoff in beide Richtungen laufen kann. Dadurch wird eine gewisse Abdichtung beim Schlie en auf beiden Seiten erreicht.

6. Markisensystem zum Überzug und Aufrollen eines Zeltstoffes für Warentransportfahrzeuge, das laut obiger Patentansprüche **dadurch gekennzeichnet ist, dass** das Zelttuch von einem Gerüst gehalten wird, das wie ein Blasebalg aussieht, oder auch durch Schwenkarme, durch die der Überzug an die jeweiligen Besonderheiten des Fahrzeugs angepasst werden kann, um das Entrollen oder Aufrollen durchzuführen.

7. Markisensystem zum Überzug und Aufrollen eines Zeltstoffes für Warentransportfahrzeuge, das laut obiger Patentansprüche **dadurch gekennzeichnet ist, dass** die Rolle statt quer auf der Ladefläche angebracht zu sein auch in Längsrichtung zu dieser besfestigt werden kann, so dass der Zeltstoff auch auf der Breitseite der Ladefläche verschoeben werden kann.

8. Markisensystem zum Überzug und Aufrollen eines Zeltstoffes für Warentransportfahrzeuge, das laut obiger Patentansprüche **dadurch gekennzeichnet ist, dass** das Netzgerät des Motors (1) eine externe Stromspeisung darstellt.

## Claims

1. System of canvas covering and uncovering for freight vehicles, said system comprising a canvas rolled on a roller (4) located at front part of a truck wagon, which is able to be extended and folded back along the roof of the truck wagon, the system cormprising slides (15) and slides being displaced inside guides (8) with a rod attached between the slides acting as mechanical claw on the canvas , being between the two slides with anchor holes (17) and (22), including a pulling plate joined by a hinge to a cross section (18) provided with anchor holes (21), the whole powered in a synchronized way by two single-phase (mopophase) motors (1), the canvas being reinforced on both sides, throughout its length by steel wires (14), joined to the slided, whilst a transmision of the motors being made by chains (13) geared in pinions (9), (0) and (11) plus a tensor axis (12) and operated by a control (23) connected to the motors.

2. System of canvas covering and uncovering for freight vehicles, according to claim 1, wherein two electric motors (1), wherein a power requirement of the motors is determined by a length of the truck wagon and pulling requirements of the canvas, with a desconexion clutch in case of damage, feeding by the vehicle battery.

3. System of canvas covering and uncovering for freight vehicles, according to claim 1, wherein is operated by the vehicle motor assisted by a mechanical transmision in the gearbox.

4. System of canvas covering and uncovering for freight vechicles, according to previous claims, wherein the roller (4) is wound synchronized with the motor (1) by a couple of pinions (3), (5) operated by a drive Caín (7) and one of the slides by a pinion (2) and the drive chain (6).

5. System of canvas covering and uncovering for freight vehicles, according to previous claims, wherein the guides (8) have clamps held in place by anchor bolts so that the canvas supported by the lateral wires (14) is moved in both directions for a watertight closure.

6. System of canvas covering and uncovering for freight vehicles.according to previous claims, wherein the canvas is supported by a framework of expansible side, or else by articulated arms in order to adapt to the vehicle needs in order to cover and uncover.

7. System of canvas covering and uncovering for freight vehicles, according to previous claims, wherein the roller instead to be transversally placed in the truck wagon, can be placed lengthwise, running along a width of the truck wagon.

8. System of canvas covering and uncovering for freight vehicles, according to previous claims, wherein the motor feeding system (1) constitutes an external feeding supply.
